# EUROPÄISCHE PATENTANMELDUNG

(11) **EP 3 132 912 A1**
(43) Veröffentlichungstag der Anmeldung: **22.02.2017**
(21) Anmeldenummer: 16184505.2
(22) Anmeldetag: 17.08.2016
(51) Int. Cl.: B29C 49/42, B29C 49/80

(54) **VORRICHTUNG ZUM RUHIGSTELLEN VON KUNSTSTOFFBEHÄLTERN**

(30) Priorität: 21.08.2015 CH 12122015
(71) Anmelder: M. Tanner AG, 8308 Illnau (CH)
(72) Erfinder: Tanner, Marcel, 8303 Bassersdorf (CH)
(74) Vertreter: Schaad, Balass, Menzl & Partner AG

(57) **Zusammenfassung**

Die vorliegende Erfindung ist gerichtet auf eine Vorrichtung zum Ruhigstellen von Vorformlingen (2) für Kunststoffbehälter, insbesondere von PET-Flaschenvorformlingen, im Einlaufbereich einer Mitnehmervorrichtung (1) einer Inspektionseinheit, aufweisend: ein Aufsatzteil (10), welches zumindest einen ersten Funktionsabschnitt (11a) und einen zweiten Funktionsabschnitt (11b) aufweist, wobei der zweite Funktionsabschnitt (11b) stromabwärts von dem ersten Funktionsabschnitt (11a) angeordnet ist, wobei der erste Funktionsabschnitt (11a) insbesondere vertikale Störbewegungen eines von der Mitnehmervorrichtung (1) übernommenen Vorformlings (2) eindämmt und zwar derart, dass der zweite Funktionsabschnitt (11b) mit dem Vorformling (2) in einen im Wesentlichen formschlüssigen Führungseingriff gelangt, welcher ein vollständiges Ruhigstellen des Vorformlings (2) bewirkt.

## Beschreibung

Die Erfindung betrifft eine Vorrichtung zum Ruhigstellen von Vorformlingen für Kunststoffbehälter, insbesondere von PET-Flaschenvorformlingen, im Einlaufbereich einer Mitnehmervorrichtung, wie etwa einem Sternrad, einer Inspektions- und ggf. Auswerfereinheit.

Eine entsprechende Inspektions- und Auswerfereinheit für solche Vorformlinge ist etwa aus der EP 2 845 715 A1 bekannt. Diese umfasst eine Mitnehmervorrichtung in Form eines Sternrads, welches von einer Zufördervorrichtung zu der Inspektions- und Auswerfereinheit gelangende Vorformlinge aufnimmt, weitertransportiert und jedenfalls einen Teil der Vorformlinge an eine Wegfördervorrichtung weitergibt. Die Inspektions- und Auswerfereinheit umfasst des Weiteren eine Detektionsvorrichtung in Form einer Kamera mittels derer fehlerhafte Vorformlinge in dem Sternrad erkannt werden sowie eine Auswurfvorrichtung mittels derer als fehlerhaft erkannte Vorformlinge aus dem Sternrad entfernt werden.

Diese Inspektions- und Auswerfereinheit hat sich in der Praxis bewährt; allerdings wurde festgestellt, dass bei höheren Transportgeschwindigkeiten (d.h. ab ungefähr 30'000 Vorformlingen pro Stunde) die Vorformlinge beim Einlaufen in das Sternrad ins Wackeln bzw. Vibrieren geraten können, so dass die Kamera ggf. keine klaren Aufnahmen von den an ihr vorbei bzw. unter ihr durchlaufenden Vorformlingen machen kann und somit die Möglichkeit besteht, dass fehlerhafte Vorformlinge nicht als solche erkannt werden.

Es ist daher die Aufgabe der vorliegenden Erfindung, eine Vorrichtung bereitzustellen, mittels derer die Vorformlinge auch bei höheren Transportgeschwindigkeiten derart ruhig gestellt werden können, dass die Kamera einer Inspektions- und ggf. Auswerfereinheit verwacklungsfreie Aufnahmen der Vorformlinge machen kann.

Diese Aufgabe wird erfindungsgemäss gelöst mittels einer Vorrichtung zum Ruhigstellen von Vorformlingen für Kunststoffbehälter, insbesondere von PET-Flaschenvorformlingen, im Einlaufbereich einer Mitnehmervorrichtung einer Inspektionseinheit, aufweisend: ein Aufsatzteil, welches zumindest einen ersten Funktionsabschnitt und einen zweiten Funktionsabschnitt aufweist, wobei der zweite Funktionsabschnitt stromabwärts von dem ersten Funktionsabschnitt angeordnet ist, wobei der erste Funktionsabschnitt insbesondere vertikale Störbewegungen eines von der Mitnehmervorrichtung übernommenen Vorformlings eindämmt und zwar derart, dass der zweite Funktionsabschnitt mit dem Vorformling in einen im Wesentlichen formschlüssigen Führungseingriff gelangt, welcher ein vollständiges Ruhigstellen des Vorformlings bewirkt.

Mit formschlüssigem Führungseingriff ist vorliegend gemeint, dass der Vorformling durch geeignete Mittel formschlüssig weiter entlang des Transportweges geführt bzw. transportiert werden kann ohne zu Verklemmen oder zu Verkeilen.

Mit vollständigem Ruhigstellen ist vorliegend gemeint, dass der Vorformling keinerlei Störbewegungen mehr ausführt, sei es in vertikaler oder horizontaler Richtung. Ebenso werden Dreh- und Kippbewegungen des Vorformlings unterbunden.

Das Aufsatzteil (welches auch als Beruhigungs- oder Niederhalteklotz bezeichnet wird) wird zweckmässiger Weise an bzw. oberhalb einer Führungsschiene montiert, welche in einer gemeinsamen Ebene mit und entlang der Mitnehmervorrichtung (d.h. in der Regel einem Sternrad) angeordnet ist.

Das Aufsatzteil weist im ersten Funktionsabschnitt zweckmässiger Weise Mittel auf, welche dem Vorformling insbesondere in vertikaler Richtung nur ein geringes Spiel (bzw. ein geringer werdendes Spiel) gegenüber der Unterseite einer Abdeckplatte des Aufsatzteils lassen.

Im zweiten Funktionsabschnitt weist das Aufsatzteil, wie vorstehend erwähnt, zweckmässiger Weise Mittel auf, welche vorzugsweise in einen formschlüssigen Führungseingriff mit dem Tragring des Vorformlings gelangen, so dass der Vorformling ohne jedes weitere Verwackeln bzw. ohne jede weitere Störbewegung weitergeführt werden kann. Die Kamera der Inspektionseinheit kann dann scharfe Aufnahmen des Vorformlings anfertigen und defekte Vorformlinge mit hoher Zuverlässigkeit aussortieren.

Mittels der erfindungsgemässen Vorrichtung können Transportgeschwindigkeiten von über 50'000 Vorformlingen pro Stunde realisiert werden, ohne dass es zu Problemen hinsichtlich der Qualität bei den Aufnahmen von den an der Kamera vorbeitransportierten Vorformlingen käme.

In einer bevorzugten Ausführungsform der vorliegenden Erfindung weist das Aufsatzteil eine Abdeckplatte auf, welche sich über den ersten und den zweiten Funktionsabschnitt erstreckt. Die Abdeckplatte weist bevorzugt eine Länge (L) auf, welche zumindest zweimal dem Tragringdurchmesser eines Vorformlings entspricht und eine Breite (B), welche wenigstens ein bis 1,5 mal der Breite des Tragringdurchmessers entspricht. Diese Dimensionen haben sich in der Praxis als besonders tauglich erwiesen, da sie einerseits auseichen, um ein vollständiges Ruhigstellen der Vorformlinge zu bewirken, das Aufsatzteil platzsparend ausgestaltet werden kann und ggf. keine oder nur geringfügige Anpassungen an einen gekrümmten Transportweg der Vorformlinge erforderlich sind.

In einer weiteren bevorzugten Ausführungsform der vorliegenden Erfindung stehen von der Abdeckplatte, insbesondere im Bereich des zweiten Funktionsabschnitts, zwei Seitenwände (senkrecht) ab, welche vorzugsweise an ihrem unteren Ende jeweils einen (waagrecht) nach innen gerichteten Vorsprung aufweisen, so dass der zweite Funktionsabschnitt einen im Wesentlichen C-profilförmigen Querschnitt aufweist. Unterhalb dieser Vorsprünge bzw. dieses C-Profils laufen die Tragringe der Vorformlinge hindurch, während die Mündung der Vorformlinge den durch das C-Profil definierten Innenraum durchläuft.

In einer weiteren bevorzugten Ausführungsform der vorliegenden Erfindung verlaufen die Seitenkanten der Vorsprünge parallel zu den Seitenwänden oder aber sie weisen eine Krümmung auf. Bei der vorstehend angegebenen Länge (L) für die Abdeckplatte (welche regelmässig auch der Gesamtlänge des Aufsatzteils entspricht) reicht eine gerade Ausgestaltung der Vorsprünge aus, ohne dass der Transport der Vorformling entlang der gekrümmten Bahn des Sternrads behindert würde. Es ist aber natürlich auch möglich, die Vorsprünge an die umfängliche Krümmung des Sternrads bzw. einer korrespondierend dazu verlaufenden Führungsschiene (auf welcher die Tragringe der Vorformlinge auch zum Teil aufliegen) anzupassen. Dies ist insbesondere dann sinnvoll, wenn eine längere Ausgestaltung der Aufsatzteils gewählt wird. Die Vorsprünge bzw. ihre Seitenkanten dienen der seitlichen Führung der Vorformlinge (d.h. im Bereich der Mündung oberhalb des Tragrings) und helfen, seitliche Stör- sowie Drehbewegungen abzustellen.

In einer weiteren bevorzugten Ausführungsform der vorliegenden Erfindung ist zumindest an einer Seitenwand des Aufsatzteils ein Montageabschnitt angeordnet, mittels welchem das Aufsatzteil an einer Führungseinrichtung der Inspektionseinheit befestigbar ist. Der Montageabschnitt ist bevorzugt als blockartiges Gebilde mit einer durchgehenden Bohrung zur Aufnahme eines Befestigungsmittels (z.B. eine Schraube) ausgestaltet. Weiter vorzugsweise ist die Bohrung als Langlochbohrung ausgebildet, um eine möglichst variable Montage des Aufsatzteils gewährleisten zu können.

In einer weiteren bevorzugten Ausführungsform der vorliegenden Erfindung weist der Montageabschnitt an seiner Unterseite eine Dreipunktauflage auf. Die Dreipunktauflage ist vorzugsweise in die Unterseite des Montageabschnitts eingefräst. Sie dient einerseits dazu, dass sich das Aufsatzteil beim Anziehen der Schraube während der Montage des Aufsatzteils an der Führungsschiene nicht verdreht. Andererseits wird mittels der Dreipunktauflage auch der notwendige Abstand zwischen der Unterseite der (nach innen gerichteten) Vorsprünge und der Oberseite der Führungsschiene bereitgestellt, damit die Tragringe dazwischen geführt (und insbesondere niedergehalten) werden können, ohne sich jedoch zu verklemmen. Der Abstand ist daher in der Regel etwas grösser als die Dicke des Tragrings eines Vorformlings.

In einer weiteren bevorzugten Ausführungsform der vorliegenden Erfindung weist die Abdeckplatte im Bereich des zweiten Funktionsabschnitts an ihrer Unterseite eine Abstufung auf, wobei der Abstand von der Mündungsöffnung des Vorformlings zur Unterseite der Abdeckplatte im Bereich nach der Abstufung grösser ist als im Bereich vor der Abstufung (dies gilt jedoch nicht zwingend für den Bereich des ersten Führungsabschnitts welcher die, nachfolgend beschriebene, Abschrägung aufweist). Im Querschnitt gesehen erfolgt die Abstufung nach etwa 1/5 der Länge des zweiten Funktionsabschnitts, bevorzugt nach etwa 1/4 der Länge des zweiten Funktionsabschnitts und weiter bevorzugt nach etwa 1/3 der Länge des zweiten Funktionsabschnitts (jeweils in Transportrichtung gesehen). Sin und Zweck dieser Massnahme ist es zu verhindern, dass der Vorformling beim Verlassen des Aufsatzteils bzw. des zweiten Funktionsabschnitts des Aufsatzteils mit seiner Mündungsöffnung an der Unterkante der Abdeckplatte hängen bleibt und verkippt wird. Dies würde wiederum dazu führen, dass der Vorformling an andere Vorformlinge anschlägt und es ggf. zu einer Betriebsstörung in der Inspektionseinheit kommt.

In einer weiteren bevorzugten Ausführungsform der vorliegenden Erfindung weist die Abdeckplatte, insbesondere im Bereich des ersten Funktionsabschnitts, eine Abschrägung an ihrer Unterseite auf. Die Abschrägung soll verhindern, dass die Vorformlinge beim Einlaufen in das Aufsatzteil ggf. an der Vorder- bzw. Einlaufkante der Abdeckplatte anschlagen und es so zu einem Stau im Einlaufbereich der Inspektionseinheit kommt. Die Abschrägung weist einen Winkel α zwischen 10° und 45°, bevorzugt zwischen 15° und 40° und weiter bevorzugt zwischen 20° und 35° auf.

In einer weiteren bevorzugten Ausführungsform der vorliegenden Erfindung ist das Aufsatzteil aus einem Block gefräst. Diese Art der Herstellung hat sich als besonders präzise und kostengünstig erwiesen. In der Praxis hat es sich ausserdem als günstig erwiesen, bei einer Umstellung auf eine andere Vorformlingsgrösse gleich mit entsprechenden Dimensionen gefräste Aufsatzteile zur Hand zu haben. Grundsätzlich ist aber auch eine verstellbare Ausgestaltung des Aufsatzteils denkbar (d.h. etwa mit verstellbarer Schräge, Länge, und/oder Breite).

In einer weiteren bevorzugten Ausführungsform der vorliegenden Erfindung weist die Abdeckplatte eine Sichtöffnung auf. Diese dient in erster Linie der Betriebskontrolle. Anstelle einer Sichtöffnung kann aber auch eine Montagebohrung für zusätzliche bzw. Befestigungselemente und/oder Bauelemente vorhanden sein (etwa bei einer verstellbaren Ausgestaltung des Aufsatzteils).

In einer noch weiteren bevorzugten Ausführungsform der vorliegenden Erfindung umfasst die Mitnehmervorrichtung ein Sternrad. Abstandsgleich zu diesem verläuft in der Regel korrespondierend eine Führungsschiene (d.h. als zusätzliche Auflage für den Tragring).

Eine beispielhafte Ausführungsform der vorliegenden Erfindung wird im Hinblick auf eine bessere Anschaulichkeit anhand der beiliegenden Zeichnungen illustriert.

Es zeigt:
- Fig. 1: eine Ausschnittansicht aus einer Inspektionseinheit mit einer im Einlaufbereich des Sternrads angeordneten erfindungsgemässen Vorrichtung;
- Fig. 2: eine perspektivische Ansicht einer erfindungsgemässen Vorrichtung;
- Fig. 3: eine Vorderansicht einer erfindungsgemässen Vorrichtung gemäss Fig. 2;
- Fig. 4: eine Schnittansicht der erfindungsgemässen Vorrichtung entlang der Linie A - A gemäss Fig. 3;
- Fig. 5: eine Unteransicht einer erfindungsgemässen Vorrichtung gemäss Fig. 2; und
- Fig. 6: eine Draufsicht auf eine erfindungsgemässe Vorrichtung gemäss Fig. 2.

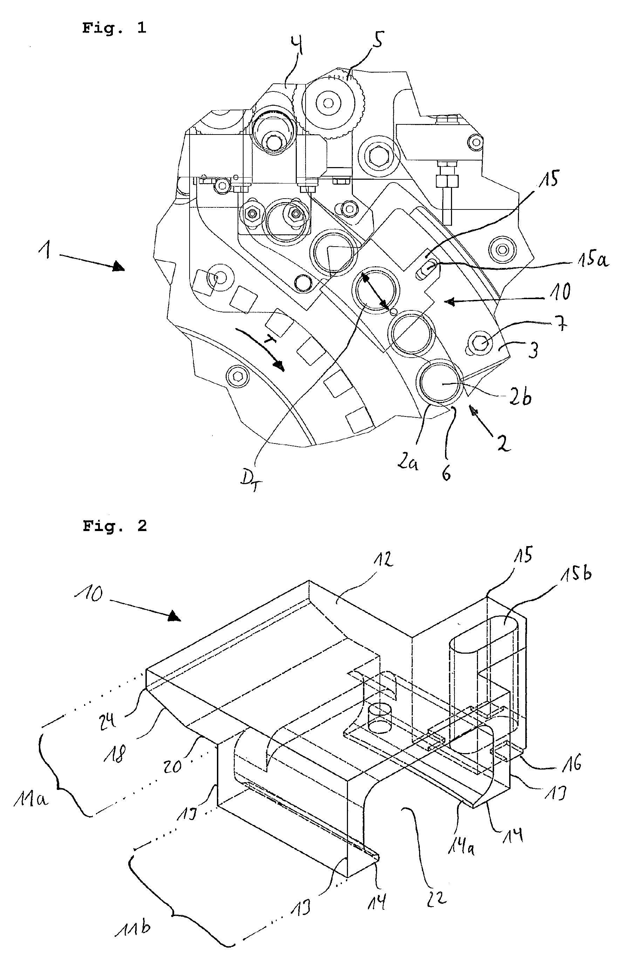

In **Fig. 1** wird eine Ausschnittansicht aus einer Inspektionseinheit mit einem im Einlaufbereich des Sternrads 1 angeordneten erfindungsgemässen Aufsatzteil 10 gezeigt. Die Vorformlinge 2 werden über die Zuführeinrichtung 4 (d.h. in der Regel eine Zuführschiene) zu dem Sternrad 1 der Inspektionseinheit transportiert und dort von einer korrespondierenden Transportausnehmung 6 des Sternrads 1 übernommen. Über die ebenfalls dargestellte Verstellvorrichtung 5 kann die Zuführeinrichtung 4 im Übrigen auf andere Vorformlingsgrössen umgestellt werden.

Das erfindungsgemässe Aufsatzteil 10 ist regelmässig sehr nahe an der Einlaufstelle für die Vorformlinge 2 in das Sternrad 1 angeordnet, um diese so bald als möglich ruhigzustellen für die (in relativer Nähe) stromabwärts angeordnete Kamera der Inspektionseinheit (nicht dargestellt). Wie zu sehen, durchlaufen ungefähr zwei Vorformlinge 2 gleichzeitig das Aufsatzteil 10. Das Aufsatzteil 10 ist mittels eines Montageabschnitts 15 sowie einem entsprechenden Befestigungsmittel an einer Führungseinrichtung 3 (in der Regel einer Führungsschiene) angeordnet, auf welcher ein Teil des Tragrings 2a der Vorformlinge 2, welcher nicht auf der Oberseite der Transportausnehmung 6 aufliegt, geführt wird.

Der Durchmesser D_{T} des Tragrings 2a ist, wie üblich, grösser als jener der Mündungsöffnung 2b des Vorformlings 2. Die Führungsschiene 3 weist eine umfängliche Krümmung auf, welche mit jener des Sternrads 1 korrespondiert. Die Führungsschiene 3 ist etwa mittels von Schrauben 7 an einem Rahmenteil der Inspektionseinheit montiert, wobei die Führungsschiene 3, analog zu der Zuführeinrichtung 4, auf eine andere Vorformlingsgrösse umgestellt werden kann. Der Pfeil T gibt im Übrigen die Transportrichtung an.

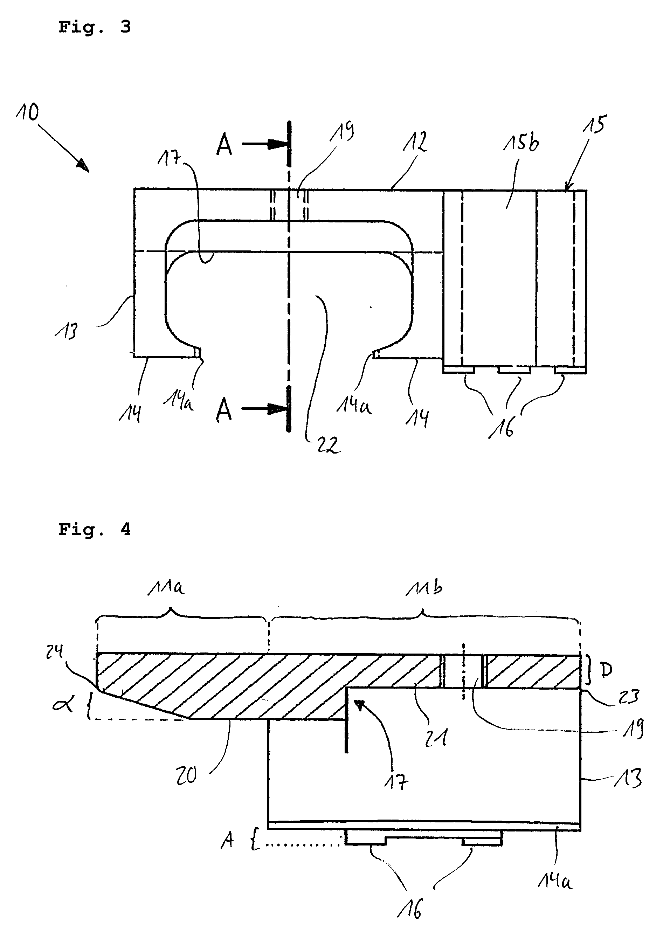

Das erfindungsgemässe Aufsatzteil 10 wird genauer in der **Fig. 2** veranschaulicht. Von links nach rechts, d.h. in Transportrichtung T gesehen, erkennt man zunächst die Abdeckplatte 12 mit der Einlaufkante 24 (vgl. auch **Fig. 4****),** der Abschrägung 18 und der daran anschliessenden waagrechten Unterseite 20 (bzw. des äusseren Teils davon, welcher bis zu den Seitenwänden 13 reicht) der Abdeckplatte 12. Dieser Abschnitt des Aufsatzteils 10 umfasst den ersten Funktionsabschnitt 11a, welcher insbesondere zunächst vertikale Störbewegungen (d.h. insbesondere durch die Anlage bei höheren Transportgeschwindigkeiten verursachte Wackeln bzw. Vibrationsbewegungen) eines von der Mitnehmervorrichtung übernommenen (d.h. von der Zuführeinrichtung 4 kommenden) Vorformlings 2 einbremst bzw. eindämmt, indem sie ein bis zur waagrechten Unterseite 20 immer kleiner werdendes Spiel in vertikaler Richtung für den Vorformling 2 bzw. dessen Mündung bereitstellt, welches schliesslich im waagrechten Bereich der Unterseite 20 zunächst konstant klein bleibt (etwa im Bereich von wenigen Millimetern oder gar wenigen Zehntelmillimetern).

Die von der Abdeckplatte 12 senkrecht nach unten abstehenden Seitenwände 13 mit den nach innen gerichteten Vorsprüngen 14 bilden dann den zweiten Funktionsabschnitt 11b des erfindungsgemässen Aufsatzteils 10. Hier gelangt der Vorformling 2 in einen im Wesentlichen formschlüssigen Führungseingriff, welcher ein vollständiges Niederhalten bzw. Ruhigstellen des Vorformlings 2 bewirkt. Der Führungseingriff für den Vorformling 2 bzw. für den Tragring 2a desselben wird vorliegend zwischen den Unterseiten der Vorsprünge 14 sowie der Oberseite der Führungsschiene 3 (vgl. **Fig. 1**) ausgebildet.

An einer Seitenwand 13 des Aufsatzteils 10 (d.h. vorzugsweise an der nach aussen gerichteten Seitenwand 13) ist der blockförmige Montageabschnitt 15 vorgesehen, welcher vermittels der Montage- bzw. Langlochbohrung 15b sowie einem geeigneten Befestigungsmittel verstellbar an der Führungsschiene 3 montiert werden kann. An der Unterseite des Montageabschnitts 15 ist eine Dreipunktauflage 16 vorgesehen. Im Bereich des zweiten Funktionsabschnitts 11b definieren die Abdeckplatte 12, die Seitenwände 13 sowie die Vorsprünge 14 den Innenraum 22, welchen die Mündungen der Vorformlinge 2 (d.h. die Abschnitte oberhalb des Tragrings 2a) durchlaufen.

In **Fig. 3** wird eine Vorderansicht des erfindungsgemässen Aufsatzteils 10 gemäss **Fig. 2** dargestellt. Die Abdeckplatte 12 sowie die von ihr abstehenden Seitenwände 13 mit den nach innen gerichteten Vorsprüngen 14 definieren wie gehabt den Innenraum 22. Im oberen Bereich des Innenraums 22 ist des Weiteren eine Abstufung 17 zu erkennen, deren Zweck weiter unten im Zusammenhang mit **Fig. 4** näher erläutert wird. Im mittleren Bereich der Abdeckplatte 12 ist auch eine Öffnung 19 angeordnet. Dabei kann es sich um eine Sichtöffnung für die Betriebskontrolle handeln oder aber um eine Gewindebohrung zur Anbringung weiterer Bauelemente bzw. zur weiteren Befestigung des Aufsatzteils 10.

Man erkennt wiederum den Montageabschnitt 15 mit der Langlochbohrung 15b und der an seiner Unterseite angeordneten Dreipunktauflage 16 für eine verdrehungsfreie Montage des Aufsatzteils 10 an der Führungsschiene 3. Die Seitenkanten 14a der Vorsprünge 14 sind üblicherweise, wie zu sehen, senkrecht ausgestaltet. Sie sorgen für eine seitliche Führung der Vorformlinge (d.h. im Bereich der Mündung oberhalb des Tragrings 2a) und tragen überdies dazu bei, seitliche Stör- sowie Drehbewegungen einzudämmen bzw. abzustellen.

**Fig. 4** veranschaulicht eine Schnittansicht des erfindungsgemässen Aufsatzteils 10 entlang der Linie A - A gemäss **Fig. 3****.** Hier erkennt man nochmals die Ausgestaltung des ersten Funktionsabschnitts 11a mit der Abschrägung 18 (vgl. **Fig. 2****),** welche einen Winkel α definiert, welcher zwischen 10° und 45°, bevorzugt zwischen 15° und 40° und weiter bevorzugt zwischen 20° und 35° beträgt. Der Übergang vom ersten Funktionsabschnitt 11a zum zweiten Funktionsabschnitt 11b erfolgt in der Regel an der Stelle, wo die Seitenwände 13 von der waagrechten Unterseite 20 der Abdeckplatte 12 abstehen. Wie zu sehen, erstreckt sich die waagrechte Unterseite 20 aber auch noch ein Stück weit in den Bereich des zweiten Funktionsabschnitts 11b hinein, und zwar um etwa 1/5 bis 1/3 der Gesamtlänge des zweiten Funktionsabschnitts 11b. An der Stelle, an der die waagrechte Unterseite 20 endet, erfolgt eine Abstufung 17, welche dem Vorformling 2 bzw. dessen Mündungsöffnung mehr Spiel (d.h. gegenüber der waagrechten Unterseite der Abdeckplatte 21 nach der Abstufung 17) gewährt als zuvor.

Dies dient dem Zweck, dass der Vorformling 2 beim Verlassen des Aufsatzteils 10 nicht mit seiner Mündung bzw. seiner Mündungsöffnung 2b an der Auslaufkante 23 der Abdeckplatte 12 am Ende des zweiten Funktionsabschnitts 11b hängen bleibt und es zu einem Verkippen des Vorformlings 2 und ggf. einem Anschlagen an den vor- bzw. nachlaufenden Vorformlingen 2 kommt. Mittels der Abstufung 17 können derartige Betriebsstörungen sicher vermieden werden. Die waagrechte Unterseite der Abdeckplatte 21 nach der Abstufung 17 ist regelmässig etwas länger als der Durchmesser D_{T} des Tragrings 2a eines Vorformlings 2.

Im Bereich nach der Abstufung 17 beträgt die Dicke D der Abdeckplatte 12 nur noch etwa die Hälfte verglichen mit der Dicke, welche sie im Bereich der waagrechten Unterseite 20 aufweist. Man erkennt ausserdem wieder die, als Gewindebohrung ausgeführte, Öffnung 19 sowie die Seitenkante 14a des von der Seitenwand 13 nach innen abragenden Vorsprungs 14.

An der Unterseite des Montageblocks 15 erkennt man wiederum die Dreipunktauflage 16 sowie den Abstand A welche die Dreipunktauflage gegenüber der Unterseite des Vorsprungs 14 bildet. Dieser Abstand A ist so bemessen, dass mit dem Tragring 2a eines Vorformlings 2 ein im Wesentlichen formschlüssiger Führungseingriff ausgebildet werden kann, welcher den Vorformling einerseits zuverlässig und vollständig niederhält bzw. ruhigstellt und andererseits kein Verklemmen oder Verkeilen des Vorformlings 2 beim Transport verursacht. Eine zusätzliche Dreipunktauflage 16 (oder eine entsprechende Abstützung) kann ggf. auch an der Unterseite der gegenüberliegenden Seitenwand 13 vorgesehen sein.

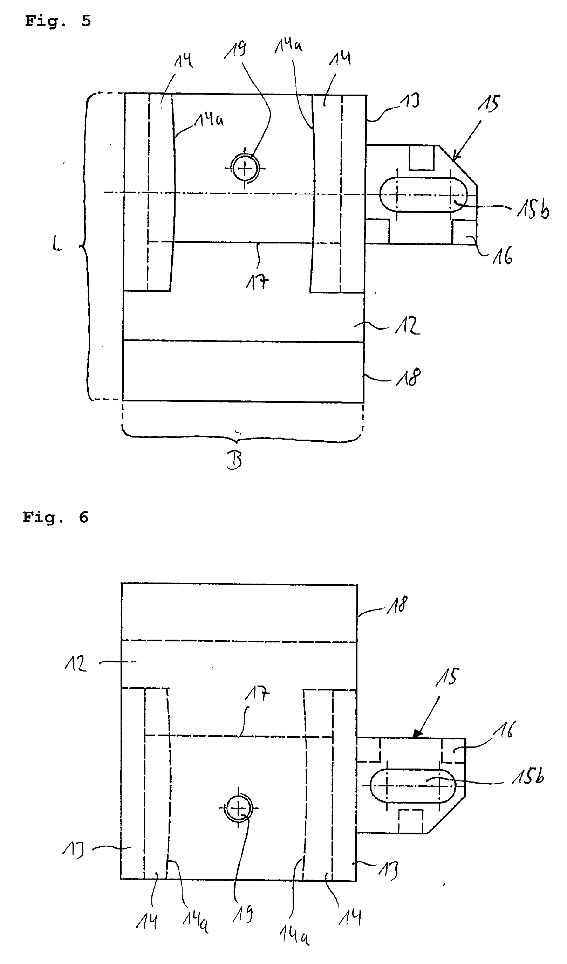

Die **Fig. 5** illustriert eine Unteransicht eines erfindungsgemässen Aufsatzteils 10. Man erkennt die Abmessungen der Abdeckplatte 12, nämlich die Länge L und die Breite B. Das Verhältnis L:B beträgt vorzugsweise etwa 5:2, besonders bevorzugt etwa 5:3 und noch weiter bevorzugt 5:4. Überdies veranschaulicht **Fig. 5** noch, dass die Vorsprünge 14 bzw. die Seitenkanten 14a der Vorsprünge 14 einen gekrümmten Verlauf aufweisen können. Dieser richtet sich regelmässig nach der umfänglichen Krümmung des Sternrads 1 sowie der Führungsschiene 3 und dient gegebenenfalls einer ungehinderten Passage des Vorformlings 2 durch das Aufsatzteil 10. Schliesslich veranschaulicht die **Fig. 6** eine entsprechende Draufsicht auf ein erfindungsgemässes Aufsatzteil 10 mit gekrümmten Vorsprüngen 14 bzw. Seitenkanten 14a.

Gleiche Bezugszeichen bezeichnen in der vorliegenden Beschreibung im Übrigen durchwegs dieselben Bauteile.

### Bezugszeichenliste:

- 1: Mitnehmervorrichtung (Sternrad)
- 2: Vorformling
- 2a: Tragring
- 2b: Mündungsöffnung
- 3: Führungseinrichtung (Führungsschiene)
- 4: Zuführeinrichtung
- 5: Verstellvorrichtung
- 6: Transportausnehmung (Sternrad)
- 7: Schraube
- 10: Aufsatzteil
- 11a: erster Funktionsabschnitt
- 11b: zweiter Funktionsabschnitt
- 12: Abdeckplatte
- 13: Seitenwände
- 14: Vorsprünge
- 14a: Seitenkanten
- 15: Montageabschnitt
- 15a: Befestigungsmittel
- 15b: Montagebohrung
- 16: Dreipunktauflage
- 17: Abstufung
- 18: Abschrägung
- 19: Sichtöffnung
- 20: waagrechte Unterseite Abdeckplatte (vor Abstufung)
- 21: waagrechte Unterseite Abdeckplatte (nach Abstufung)
- 22: Innenraum
- 23: Auslaufkante
- 24: Vorderkante (Einlaufkante)
- A: Abstand
- B: Breite
- D: Dicke
- D_{T}: Durchmesser Tragring
- L: Länge
- T: Transportrichtung
- α: Winkel der Abschrägung

## Patentansprüche

1. Vorrichtung zum Ruhigstellen von Vorformlingen für Kunststoffbehälter, insbesondere von PET-Flaschenvorformlingen, im Einlaufbereich einer Mitnehmervorrichtung (1) einer Inspektionseinheit, aufweisend:
ein Aufsatzteil (10), welches zumindest einen ersten Funktionsabschnitt (11a) und einen zweiten Funktionsabschnitt (11b) aufweist, wobei der zweite Funktionsabschnitt (11b) stromabwärts von dem ersten Funktionsabschnitt (11a) angeordnet ist, wobei
der erste Funktionsabschnitt (11a) insbesondere vertikale Störbewegungen eines von der Mitnehmervorrichtung (1) übernommenen Vorformlings (2) eindämmt und zwar derart, dass
der zweite Funktionsabschnitt (11b) mit dem Vorformling (2) in einen im Wesentlichen formschlüssigen Führungseingriff gelangt, welcher ein vollständiges Ruhigstellen des Vorformlings (2) bewirkt.

2. Vorrichtung gemäss Anspruch 1, **dadurch gekennzeichnet, dass** das Aufsatzteil (10) eine Abdeckplatte (12) aufweist, welche sich über den ersten und den zweiten Funktionsabschnitt (11a, 11b) erstreckt.

3. Vorrichtung gemäss Anspruch 1 oder 2, **dadurch gekennzeichnet, dass** das die Abdeckplatte (12) eine Länge (L) aufweist, welche zumindest zweimal dem Tragringdurchmesser (D_{T}) eines Vorformlings (2) entspricht und eine Breite (B), welche jedenfalls einmal der Breite des Tragringdurchmessers (D_{T}) entspricht.

4. Vorrichtung gemäss einem der vorhergehenden Ansprüche, **dadurch gekennzeichnet, dass** von der Abdeckplatte (12), insbesondere im Bereich des zweiten Funktionsabschnitts (11b), zwei Seitenwände (13) abstehen, welche vorzugsweise an ihrem unteren Ende jeweils einen nach innen gerichteten Vorsprung (14) aufweisen, so dass der zweite Funktionsabschnitt (11b) einen im Wesentlichen C-profilförmigen Querschnitt aufweist.

5. Vorrichtung gemäss Anspruch 4, **dadurch gekennzeichnet, dass** die nach innen gerichteten Vorsprünge (14) im Wesentlichen waagrecht von den Seitenwänden (13) abstehen.

6. Vorrichtung gemäss Anspruch 4, **dadurch gekennzeichnet, dass** die Seitenkanten (14a) der Vorsprünge (14) parallel zu den Seitenwänden (13) verlaufen oder aber eine Krümmung aufweisen.

7. Vorrichtung gemäss einem der vorhergehenden Ansprüche, **dadurch gekennzeichnet, dass** zumindest an einer Seitenwand (13) des Aufsatzteils (10) ein Montageabschnitt (15) angeordnet ist, mittels welchem das Aufsatzteil (10) an einer Führungseinrichtung (3) der Inspektionseinheit befestigbar ist.

8. Vorrichtung gemäss Anspruch 7, **dadurch gekennzeichnet, dass** der Montageabschnitt (15) eine Bohrung (1) für ein Befestigungsmittel (15a) aufweist.

9. Vorrichtung gemäss Anspruch 7, **dadurch gekennzeichnet, dass** der Montageabschnitt (15) an seiner Unterseite eine Dreipunktauflage (16) aufweist.

10. Vorrichtung gemäss Anspruch 9, **dadurch gekennzeichnet, dass** die Dreipunktauflage (16) so ausgestaltet ist, dass im montierten Zustand die nach innen gerichteten Vorsprünge (14) der Seitenwände (13) mit ihrer Unterseite von der Oberseite der Führungseinrichtung (3) der Inspektionseinheit abstehen, wobei vorzugsweise der entsprechende Abstand (A) zumindest der Dicke des Tragrings (2a) eines Vorformlings (2) entspricht.

11. Vorrichtung gemäss einem der vorhergehenden Ansprüche, **dadurch gekennzeichnet, dass** die Abdeckplatte (12) im Bereich des zweiten Funktionsabschnitts (11b) an ihrer Unterseite eine Abstufung (17) aufweist, wobei der Abstand von der Mündungsöffnung (2b) des Vorformlings (2) zur Unterseite der Abdeckplatte (12) im Bereich nach der Abstufung (17) grösser ist als im Bereich vor der Abstufung (17).

12. Vorrichtung gemäss einem der vorhergehenden Ansprüche, **dadurch gekennzeichnet, dass** die Abdeckplatte (12), insbesondere im Bereich des ersten Funktionsabschnitts (11a), eine Abschrägung (18) an ihrer Unterseite aufweist.

13. Vorrichtung gemäss einem der vorhergehenden Ansprüche, **dadurch gekennzeichnet, dass** das Aufsatzteil (10) aus einem Block gefräst ist.

14. Vorrichtung gemäss einem der vorhergehenden Ansprüche, **dadurch gekennzeichnet, dass** die Abdeckplatte (12) eine Sichtöffnung (19) aufweist.

15. Vorrichtung gemäss einem der vorhergehenden Ansprüche, **dadurch gekennzeichnet, dass** die Mitnehmervorrichtung ein Sternrad (1) umfasst.
